# EUROPÄISCHE PATENTANMELDUNG

(11) **EP 4 327 647 A1**
(43) Veröffentlichungstag der Anmeldung: **28.02.2024**
(21) Anmeldenummer: 23191137.1
(22) Anmeldetag: 11.08.2023
(51) Int. Cl.: A01F 29/00, A01G 3/00

(54) **VORRICHTUNG ZUM ZERKLEINERN VON FASERFÖRMIGEN PFLANZENMATERIAL**

(30) Priorität: 22.08.2022 DE 102022121143
(71) Anmelder: Trioliet B.V., 7575 BW Oldenzaal (NL)
(72) Erfinder: Liet, Robert Jan, 7573 CS Oldenzaal (NL)
(74) Vertreter: Grünecker Patent- und Rechtsanwälte PartG mbB

(57) **Zusammenfassung**

Vorrichtung zum Zerkleinern von faserförmigen Pflanzenmaterial, insbesondere Heu, Stroh oder Silage, umfassend eine Zuführung zur Aufnahme des Pflanzenmaterials, eine Fördereinheit und eine Zerkleinerungseinheit, wobei die Fördereinheit wenigstens einen Mitnehmer zum Loslösen von Pflanzenfasern vom zugeführten Pflanzenmaterial und zum Fördern der Pflanzenfasern zur Zerkleinerungseinheit umfasst, wobei die Zerkleinerungseinheit wenigstens zwei voneinander beabstandete, stationäre Messer umfasst, wobei die Fördereinheit so ausgebildet ist, dass der wenigstens eine Mitnehmer durch die voneinander beabstandeten, stationären Messer hindurch bewegbar ist.

## Beschreibung

Die Erfindung bezieht sich auf eine Vorrichtung zum Zerkleinern von faserförmigen Pflanzenmaterial, insbesondere Heu, Stroh oder Silage.

Vorrichtungen zum Zerkleinern von faserförmigen Pflanzenmaterial, insbesondere Heu, Stroh oder Silage, finden in der Landwirtschaft zunehmend Verbreitung. Beispielhafte Vorrichtungen umfassen dabei eine Kammer, in die über eine Einfüllöffnung Futter eingebracht werden kann, wobei sich in der Kammer stabförmige Elemente in einer endlosen Bahn an der Einfüllöffnung vorbei bewegen. Die stabförmigen Elemente können sich unter dem Futter durchbewegen, wodurch das Futter aufgelockert und/oder vermischt wird. Ein Schneidvorgang wird durchgeführt, wenn das Futter einem Schneidelement, welches in der Nähe der Einfüllöffnung angeordnet ist, zugeführt wird. Auf diese Weise wird das Futter, insbesondere die Futterbestandteile, die aus längeren Fasern bestehen, wie z.B. Gras, geschnitten. Eine derartige Vorrichtung ist beispielsweise aus der EP 0 838 147 A1 bekannt.

Obwohl bekannte Vorrichtungen eine gute Zerkleinerung von faserförmigen Pflanzenmaterial erlauben, ist die Zerkleinerung zuweilen nicht zufriedenstellend, insbesondere bei stark komprimiertem Futter wie beispielsweise in Form von Ballen.

Aufgabe der Erfindung ist es daher, eine Vorrichtung zum Zerkleinern von faserförmigen Pflanzenmaterial bereitzustellen, die für eine bessere Zerkleinerung sorgt.

Diese Aufgabe wird durch eine Vorrichtung zum Zerkleinern von faserförmigen Pflanzenmaterial gemäß Anspruch 1 gelöst. Vorteilhafte Weiterbildungen finden sich in den Unteransprüchen.

Die Erfindung stellt also eine Vorrichtung zum Zerkleinern von faserförmigen Pflanzenmaterial, insbesondere Heu, Stroh oder Silage, bereit, umfassend eine Zuführung zur Aufnahme des Pflanzenmaterials, eine Fördereinheit und eine Zerkleinerungseinheit, wobei die Fördereinheit wenigstens einen zinkenförmigen Mitnehmer zum Loslösen von Pflanzenfasern vom zugeführten Pflanzenmaterial und zum Fördern der Pflanzenfasern zur Zerkleinerungseinheit umfasst, wobei die Zerkleinerungseinheit wenigstens zwei voneinander beabstandete, stationäre Messer umfasst, wobei die Fördereinheit so ausgebildet ist, dass der wenigstens eine zinkenförmige Mitnehmer durch die voneinander beabstandeten, stationären Messer hindurch bewegbar ist.

Es hat sich gezeigt, dass eine solche Vorrichtung eine bessere Zerkleinerung von faserförmigen Pflanzenmaterial erlaubt, insbesondere eine homogenere Zerkleinerung. Der zinkenförmige Mitnehmer kann insbesondere leichter Pflanzenfasern aus dem Pflanzenmaterial loslösen als aus dem Stand der Technik bekannte stabförmige Elemente. Durch das Hindurchbewegen des Mitnehmers durch die beiden Messer kann in Folge eine gleichmäßige Zerkleinerung erreicht werden.

Unter der Formulierung "stationäres Messer" kann hierin verstanden werden, dass das Messer im Betrieb der Vorrichtung für den Schneidvorgang stillsteht. Im Gegensatz zu einem beweglichen Messer wird ein stationäres Messer zum Schneiden also nicht aktiv angetrieben. Mit anderen Worten kann es sich bei einem stationären Messer um ein feststehendes Messer handeln. Dafür kann das Messer insbesondere unbeweglich an einem Teil der Vorrichtung, beispielsweise einem Tragrahmen, gelagert sein. Es ist jedoch möglich, dass die stationären Messer federnd gelagert sind. Dadurch sind die Messer immer noch als stationär anzusehen, da sie auch dann nicht für den Schneidvorgang angetrieben werden. Ein stationäres Messer hat insbesondere den Vorteil, dass es im Betrieb verschleißärmer sein kann. Insbesondere können die Messer einzeln federnd gelagert sein und/oder zumindest ein Teil der Messer kann zusammenhängend federnd gelagert sein. Dies hat insbesondere den Vorteil, dass Beschädigungen der Messer, z.B. durch Steine, verringert werden können.

Die Zerkleinerungseinheit, insbesondere die Messer der Zerkleinerungseinheit, können oberhalb der Förderfläche der Fördereinheit angeordnet sein. Insbesondere können die Messer senkrecht zur Förderfläche der Fördereinheit angeordnet sein. Dabei kann unter der Förderfläche insbesondere die Oberfläche der Fördereinheit verstanden werden, mit bzw. entlang derer das Pflanzenmaterial befördert werden kann.

Die Vorrichtung kann insbesondere als stationäre Anlage, als Zerkleinerungsroboter oder als Anhänger ausgebildet sein, wobei der Anhänger insbesondere gezogen oder selbstfahrend ausgebildet sein kann. Die Vorrichtung kann eine Austragsöffnung und, optional, einen daran anschließenden Austragsförderer umfassen, so dass zerkleinertes Pflanzenmaterial während der Fahrt ausgebracht werden kann. Im Gegensatz zu einem Anhänger, kann sich ein Zerkleinerungsroboter automatisiert entlang eines vorgegebenen oder vorgebbaren Weges bewegen. Die Vorrichtung kann insbesondere für eine Verwendung in einem landwirtschaftlichen Kontext ausgebildet sein, z.B. zum Zerkleinern von Futterballen.

Bei dem faserförmigen Pflanzenmaterial kann es sich um loses oder komprimiertes faserförmiges Pflanzenmaterial handeln, beispielsweise Heu, Stroh, Luzerne, Gras, Ganzpflanzensilage oder andersartige Silage. Das Pflanzenmaterial kann in der Form von Ballen oder Blöcken vorliegen. Das Pflanzenmaterial kann in verschiedenen Zuständen vorliegen, z.B. mit unterschiedlicher Feuchtigkeit, etwa als feuchtes Gras oder trockenes Stroh.

Durch die Vorrichtung kann auch eine Auflockerung des Pflanzenmaterials erzielt werden. Die Vorrichtung zum Zerkleinern von faserförmigen Pflanzenmaterial kann daher insbesondere als Ballenauflöser bezeichnet werden.

Die Zuführung zur Aufnahme des Pflanzenmaterials kann insbesondere an der Oberseite der Vorrichtung, insbesondere über der Fördereinheit, angeordnet sein. Insbesondere kann die Zuführung nach oben hin geöffnet sein. Es ist auch denkbar, dass die Zuführung verschließbar ist. Eine derartige Zuführung kann insbesondere den Austritt von Staub beim Zerkleinern des Pflanzenmaterials verringern. Die Angaben "oben" oder "Oberseite" beziehen sich auf die Orientierung der Komponenten im Betrieb oder betriebsfähigen Zustand der Vorrichtung.

Die Zuführung zur Aufnahme des Pflanzenmaterials kann trichterförmig ausgebildet sein. Die Fördereinheit kann dabei unter, insbesondere unmittelbar unter, der unteren Öffnung der trichterförmigen Aufnahme angeordnet sein. Dadurch lässt sich das Pflanzenmaterial, insbesondere in Ballenform, zentriert der Fördereinheit zuführen.

Insbesondere kann die Fördereinheit ein Förderband, eine Walze oder eine Förderkette umfassen. Im Falle einer, insbesondere zylinderförmigen, Walze kann die Förderfläche die Mantelfläche der Walze umfassen oder durch diese bereitgestellt sein. Die zinkenförmigen Mitnehmer können sich dann von der Mantelfläche der Walze weg erstrecken.

Die Fördereinheit kann insbesondere so ausgebildet sein, dass sie jederzeit, insbesondere automatisch anhalten kann. Auch kann die Fördereinheit insbesondere entgegen der im Betrieb üblichen Förderrichtung des Pflanzenmaterials bewegbar sein, also von der Zerkleinerungseinheit weg. Dies hat insbesondere den Vorteil, dass durch die Richtungsänderung versucht werden kann, eine Blockierung von Pflanzenmaterial zu lösen, die z.B. die Fördereinheit daran hindern würde sich in Vorwärtsrichtung zu bewegen.

Die Fördereinheit kann insbesondere wenigstens eine Antriebsrolle und/oder Umlenkrolle umfassen. Insbesondere kann die wenigstens eine Antriebsrolle und/oder Umlenkrolle das Förderband oder die Förderkette bewegen. Mit anderen Worten kann die wenigstens eine Antriebsrolle und/oder Umlenkrolle Teil des Antriebs der Fördereinheit sein. Die wenigstens eine Antriebsrolle kann von einem Motor, beispielsweise einem Elektromotor, angetrieben werden. Die wenigstens eine Antriebsrolle kann über ein Planetengetriebe oder ein Stirnradgetriebe angetrieben werden. Die wenigstens eine Antriebsrolle und/oder Umlenkrolle kann insbesondere an einem Ende der Förderkette oder des Förderbandes angeordnet sein. Beispielsweise kann die wenigstens eine Antriebsrolle im Bereich der Zerkleinerungseinheit angeordnet sein.

Die Fördereinheit kann eine geschlossene Förderfläche umfassen, d.h., insbesondere, dass das Pflanzenmaterial vom Durchdringen oder Durchfallen durch die geschlossene Förderfläche gehindert werden kann. Insbesondere kann die Fördereinheit eine Förderfläche umfassen, die durch in Förderrichtung benachbarte oder aneinandergrenzende Lamellen gebildet wird. Insbesondere können sich die Lamellen quer zur Förderrichtung erstrecken. Die Lamellen können zwei parallel laufende Antriebsketten oder Antriebsriemen verbinden. Die Querschnittsfläche der Lamellen kann so gewählt sein, dass ein Spalt zwischen den benachbarten Lamellen minimiert wird. Beispielsweise können die Lamellen einen trapezförmigen Querschnitt aufweisen, wobei die Basis (die längere Grundseite) oben angeordnet ist, mit anderen Worten zur Förderfläche hin.

Von sich gegenüberliegenden Längsseiten von benachbarten oder aneinandergrenzenden Lamellen kann insbesondere jeweils eine konkav und eine konvex ausgebildet sein. Dadurch kann ein Spalt zwischen den benachbarten Lamellen minimiert werden. Ein Spalt zwischen den Lamellen könnte insbesondere entstehen, wenn die Lamellen sich über runde Objekte bewegen, z.B. über die Antriebsrolle oder Umlenkrolle. Durch den Spalt könnte sonst insbesondere Material zwischen die Lamellen geraten. An sich gegenüberliegenden Längsseiten von benachbarten oder aneinandergrenzenden Lamellen kann zumindest teilweise eine Abdichtung, insbesondere eine Gummiabdichtung oder eine Kunststoffabdichtung, angeordnet sein. Dadurch kann ein Spalt zwischen den benachbarten Lamellen weiter minimiert werden.

Der wenigstens eine zinkenförmige Mitnehmer kann sich insbesondere von einer Förderfläche der Fördereinheit weg erstrecken. Insbesondere kann der wenigstens eine Mitnehmer senkrecht auf der Förderfläche angeordnet sein. Der wenigstens eine Mitnehmer kann insbesondere als messerartiges Element ausgebildet sein. Insbesondere kann der wenigstens eine Mitnehmer stumpf sein, also keine Schneidkante umfassen. Die Ausdehnung des zinkenförmigen Mitnehmers quer zur Förderrichtung kann kleiner, insbesondere um ein Vielfaches kleiner, als die Ausdehnung längs der Förderrichtung sein. Mit anderen Worten kann der Zinken in Förderrichtung ausgerichtet sein.

Insbesondere kann die Fördereinheit mehr als einen zinkenförmigen Mitnehmer umfassen, insbesondere mindestens drei Mitnehmer, insbesondere mindestens sechs Mitnehmer, insbesondere mindestens zwanzig Mitnehmer. Zumindest ein Teil der mehreren Mitnehmer kann entlang einer Linie quer zur Transportrichtung der Fördereinheit angeordnet sein. Zumindest ein Teil der Mitnehmer kann insbesondere auch längs zur Transportrichtung der Fördereinheit verteilt angeordnet sein. Insbesondere kann zumindest ein Teil der Mitnehmer in Draufsicht auf die Förderfläche V-förmig, W-förmig, X-förmig, hintereinander oder diagonal zur Transportrichtung der Fördereinheit angeordnet sein.

Insbesondere können mehrere Mitnehmer jeweils in einem Block angeordnet sein, insbesondere in Blöcken von wenigstens drei Mitnehmern, insbesondere von wenigstens sechs Mitnehmern. Dadurch kann Pflanzenmaterial besser von den Mitnehmern losgelöst und zur Zerkleinerungseinheit befördert werden. Insbesondere kann ein weiterer Vorteil darin bestehen, dass durch benachbarte Mitnehmer verhindert werden kann, dass sich das Pflanzenmaterial um einen Mitnehmer herumwickelt.

Die Fördereinheit kann mehrere solcher Blöcke von Mitnehmern umfassen. Insbesondere kann der Abstand benachbarter Mitnehmer innerhalb eines Blocks geringer sein als der Abstand benachbarter Blöcke zueinander. Mehrere Blöcke von Mitnehmern können auf jeweils einer Lamelle angeordnet sein.

Zumindest ein Teil der in Blöcken angeordneten Mitnehmer kann wie oben für die Mitnehmer allgemein ausgeführt angeordnet sein. Die Blöcke können insbesondere in Draufsicht auf die Förderfläche V-förmig, W-förmig, X-förmig, hintereinander oder diagonal zur Transportrichtung der Fördereinheit angeordnet sein.

Es ist auch denkbar, dass die Vorrichtung mehr als eine Fördereinheit umfasst, insbesondere zwei oder mehr Fördereinheiten. Dabei kann jede der Fördereinheiten wie oben beschrieben ausgebildet sein. Insbesondere kann die Vorrichtung wenigstens zwei Fördereinheiten in Form von rotierenden Walzen umfassen, deren Drehachsen insbesondere parallel angeordnet sein können. Insbesondere können die wenigstens zwei Walzen gegenläufig zueinander antreibbar sein. Dadurch kann das faserförmige Pflanzenmaterial, insbesondere ein Ballen, effizient zerkleinert werden. Den wenigstens zwei Walzen können wenigstens eine Zerkleinerungseinheit, insbesondere wenigstens zwei Zerkleinerungseinheiten, zugeordnet sein. Insbesondere kann die wenigstens eine Zerkleinerungseinheit zwischen den wenigstens zwei Walzen angeordnet sein. Dies kann insbesondere der Fall sein, wenn die Drehrichtung der Walzen so ausgebildet ist, dass die Mitnehmer das losgelöste Pflanzenmaterial zum Bereich zwischen den beiden Walzen fördern. Auch ist denkbar, dass die wenigstens zwei Walzen zwischen den wenigstens zwei Zerkleinerungseinheiten angeordnet sind. Dies kann insbesondere der Fall sein, wenn die Drehrichtung der Walzen so ausgebildet ist, dass die Mitnehmer das losgelöste Pflanzenmaterial vom Bereich zwischen den beiden Walzen weg fördern.

Zwischen den zwei Walzen kann insbesondere ein Spalt ausgebildet sein. Damit können beispielsweise Fremdkörper, die sich im Pflanzenmaterial befinden können, z.B. Steine, zwischen den zwei Walzen hindurchfallen. Dabei kann die Zerkleinerungseinheit insbesondere außerhalb des Spalts angeordnet sein, z.B. an den seitlich gegenüberliegenden Seiten der Walzen. Ein entsprechend unter dem Spalt angeordneter Aufnahmebehälter kann vorgesehen sein, um die durchgefallenen Fremdkörper zu sammeln. Dies hat insbesondere den Vorteil, dass Beschädigungen der Messer vermieden werden können.

Wie oben bereits beschrieben, kann die Vorrichtung mehr als eine Zerkleinerungseinheit, insbesondere zwei oder mehr Zerkleinerungseinheiten, umfassen. Insbesondere können die wenigstens zwei Zerkleinerungseinheiten hintereinander in Transportrichtung der Fördereinheit angeordnet sein. Dies hat insbesondere den Vorteil, dass Pflanzenmaterial wenigstens zwei Zerkleinerungseinheiten nacheinander durchläuft und somit, insbesondere, eine möglichst gute Zerkleinerung möglich ist. Es ist auch denkbar, dass die zwei oder mehr Zerkleinerungseinheiten unterschiedliche Zerkleinerungsgrade aufweisen können, z.B. kann das Pflanzenmaterial zuerst eine grobe Zerkleinerungseinheit durchlaufen und anschließend eine feine Zerkleinerungseinheit durchlaufen. Die grobe Zerkleinerungseinheit kann insbesondere weniger Messer oder weiter voneinander beabstandete Messer als die feine Zerkleinerungseinheit aufweisen.

Auch wäre denkbar, dass wenigstens einer ersten Fördereinheit eine grobe Zerkleinerungseinheit zugeordnet ist und wenigstens einer zweiten Fördereinheit eine feine Zerkleinerungseinheit zugeordnet ist. Dadurch kann grob und fein zerkleinertes Pflanzenmaterial gemischt werden.

Die Zerkleinerungseinheit kann mehr als zwei voneinander beabstandete, stationäre Messer umfassen. Die Messer können quer zur Transportrichtung der Fördereinheit angeordnet sein.

Insbesondere können die Messer in regelmäßigen Abständen entlang der kompletten Breite der Fördereinheit angeordnet sein.

Auch ist es möglich, dass die Messer entlang einer Linie quer zur Transportrichtung der Fördereinheit und/oder längs zur Transportrichtung der Fördereinheit verteilt angeordnet sein können, insbesondere in Draufsicht auf die Förderfläche V-förmig, W-förmig oder diagonal angeordnet.

Die Mitnehmer und Messer können relativ zueinander derart angeordnet sein, dass die Länge der zerkleinerten Pflanzenfasern konstant ist. Dies hat insbesondere den Vorteil, dass das zerkleinerte Pflanzenmaterial möglichst homogen ist. Auch können die Mitnehmer und Messer relativ zueinander derart angeordnet sein, dass die Pflanzenfasern in kürzere und längere Pflanzenfasern zerkleinert werden.

Auch ist möglich, dass die Messer in Abhängigkeit der Anordnung der zinkenförmigen Mitnehmer angeordnet sind. Insbesondere können die Messer derart angeordnet sein, dass jeder Mitnehmer beim Durchqueren der Zerkleinerungseinheit mit zumindest zwei Messern einen Zerkleinerungsvorgang durchführt. Unter einem Zerkleinerungsvorgang ist insbesondere das Schneiden von faserförmigen Pflanzenmaterial zu verstehen.

Die Zerkleinerungseinheit kann insbesondere unmittelbar vor einem Punkt angeordnet sein, an dem das Pflanzenmaterial die Fördereinheit durch die Schwerkraft verlassen würde. Beispielsweise kann die Zerkleinerungseinheit am Ende einer als Förderband ausgebildeten Fördereinheit angeordnet sein. Im Falle einer eine oder mehrere Walzen umfassenden Fördereinheit kann die Zerkleinerungseinheit tangential zur Walze angeordnet sein, insbesondere seitlich der Walze oder Walzen. Dies hat insbesondere den Vorteil, dass zerkleinertes Pflanzenmaterial gut abtransportiert werden kann.

Die Messer und die Antriebsrolle können derart zueinander angeordnet sein, dass die Lamellen beim Zerkleinern von Pflanzenmaterial eine formschlüssige Verbindung mit der Antriebsrolle eingehen. Dadurch können Zugkräfte zwischen den Lamellen reduziert werden. Insbesondere kann die formschlüssige Verbindung lösbar sein. Unter einer lösbaren formschlüssigen Verbindung kann insbesondere verstanden werden, dass die Verbindung ohne Beschädigung der Bauteile wieder gelöst werden kann. Die Antriebsrolle kann insbesondere wenigstens ein Kettenrad umfassen. Insbesondere kann jede Lamelle wenigstens ein Kettenglied umfassen. Dabei kann jeweils wenigstens ein Kettenglied an den äußeren Enden jeder Lamelle angeordnet sein.

Insbesondere können die Kettenglieder miteinander verbunden sein. Das wenigstens eine Kettenrad und das wenigstens eine Kettenglied können insbesondere eine formschlüssige Verbindung eingehen.

Insbesondere kann die Anzahl der Mitnehmer und die Anzahl der Messer voneinander abhängen. Insbesondere kann die Anzahl der Messer derart bestimmt werden, dass eine vorteilhafte Zerkleinerung von faserförmigen Pflanzenmaterial möglich ist. Beispielsweise kann die Anzahl der Messer derart bestimmt werden, dass durch die Mitnehmer gefördertes Material an möglichst vielen Messern zerkleinert werden kann. Beispielsweise wäre denkbar, dass jeder Mitnehmer einen Zerkleinerungsvorgang mit wenigstens zwei Messern durchführt.

Insbesondere kann die Anzahl der Mitnehmer der Fördereinheit und/oder die Anzahl der Messer der Zerkleinerungseinheit in Abhängigkeit der Leistung des Motors zum Antrieb der Fördereinheit bestimmt sein. Die Mitnehmer können insbesondere zerstörungsfrei lösbar oder bedingt zerstörungsfrei lösbar mit der Förderfläche verbunden sein. Die Messer können insbesondere zerstörungsfrei lösbar oder bedingt zerstörungsfrei lösbar mit der Zerkleinerungseinheit verbunden sein. Unter bedingt zerstörungsfrei lösbar kann insbesondere verstanden werden, dass nur ein Hilfsfügeteil zerstört werden muss, aber nicht die Bauteile selbst, um die Verbindung zu lösen. Beispielsweise kann eine Niete abgeschlagen werden, um eine Nietverbindung zu lösen. Dies hat insbesondere den Vorteil, dass eine Anpassung der Anzahl der Mitnehmer und/oder der Messer besonders beschädigungsarm erfolgen kann. Insbesondere kann die Anzahl der Mitnehmer und/ oder Messer reduziert werden, wenn die Motorleistung nicht ausreicht, um die Fördereinheit, insbesondere im Betrieb, antreiben zu können. Dabei kann die benötigte Motorleistung insbesondere vom zu zerkleinernden Pflanzenmaterial abhängen. Es kann z.B. nasses Gras eine höhere Motorleistung als trockenes Stroh benötigen, um zerkleinert zu werden.

Insbesondere kann der wenigstens eine Mitnehmer derart geformt sein, dass der Mitnehmer, insbesondere die das Pflanzenmaterial tragende oder stützende Fläche, einen Winkel mit den zwei voneinander beabstandeten, stationären Messern, insbesondere deren jeweiliger Schneidkante, einschließt. Dies kann insbesondere ein allmähliches Zerkleinern, insbesondere Schneiden, des Pflanzenmaterials erlauben.

Insbesondere kann der wenigstens eine Mitnehmer der Fördereinheit derart geformt sein, dass besonders viel Pflanzenmaterial von dem wenigstens einen Mitnehmer losgelöst und/oder befördert werden kann. Auch ist es möglich, dass der wenigstens eine Mitnehmer derart geformt ist, dass möglichst viel von dem beförderten Pflanzenmaterial durch die Zerkleinerungseinheit hindurchbewegt werden kann. Zum Beispiel kann der wenigstens eine Mitnehmer derart geformt sein, dass verhindert werden kann, dass Fasern zwischen einen Spalt geraten können, der zwischen der Zerkleinerungseinheit und der Fördereinheit gebildet wird. Insbesondere kann der wenigstens eine Mitnehmer derart geformt sein, dass dieser Pflanzenfasern anhebt. Auch kann der wenigstens eine Mitnehmer derart geformt sein, dass sich Pflanzenmaterial mittig am Mitnehmer zentriert. Dabei kann die Mitte des Mitnehmers die halbe Länge darstellen, in die sich der Mitnehmer von der Förderfläche weg erstreckt. Dies hat insbesondere den Vorteil, dass mehr Pflanzenmaterial zerkleinert werden kann, da Pflanzenmaterial angehoben werden kann sowie verhindert werden kann, dass Pflanzenmaterial zwischen Mitnehmer und z.B. einen Tragrahmen an dem die Messer gelagert sein können, geraten kann und somit nicht zerkleinert werden würde. Auch ist denkbar, dass der wenigstens eine zinkenförmige Mitnehmer als senkrecht zur Förderfläche angeordnete(r) Haken, Kamm, Klinge, Messer oder Stab ausgebildet ist.

Die Form des wenigstens einen Mitnehmers kann insbesondere auch vom zu zerkleinernden Pflanzenmaterial abhängen, z.B. kann der wenigstens eine Mitnehmer für feuchtes Gras anders geformt sein als für trockenes Stroh. Wie oben beschrieben, können die Mitnehmer insbesondere zerstörungsfrei lösbar oder bedingt zerstörungsfrei lösbar mit der Förderfläche verbunden sein. Dies hat insbesondere den Vorteil, dass ein beschädigungsarmer Austausch der Mitnehmer möglich ist. Beispielsweise können Mitnehmer, die besonders vorteilhaft für feuchtes Gras geformt sind, durch Mitnehmer, die besonders vorteilhaft für trockenes Stroh geformt sind, ausgetauscht werden.

Der wenigstens eine Mitnehmer kann insbesondere derart geformt sein, dass der Mitnehmer auf der Förderfläche um 180° zur Senkrechten gedreht angeordnet werden kann. Insbesondere kann der wenigstens eine Mitnehmer symmetrisch geformt sein. Dies hat insbesondere den Vorteil, dass die Nutzungsdauer des wenigstens einen Mitnehmer erhöht werden kann, da er nach Abnützung einer Seite gedreht und mit der zweiten Seite als Mitnahmefläche weiter betrieben werden kann.

Insbesondere kann die Zerkleinerungseinheit einen Zuführbereich für das Pflanzenmaterial zur Zerkleinerungseinheit umfassen, wobei der Zuführbereich in Transportrichtung vor den wenigstens zwei voneinander beabstandeten, stationären Messern angeordnet ist, und wobei der wenigstens eine zinkenförmige Mitnehmer durch den Zuführbereich hindurch bewegbar ist.

Der Zuführbereich kann insbesondere kanalförmig ausgebildet sein. Dafür kann der Zuführbereich insbesondere nach oben begrenzt sein, beispielsweise durch ein flächiges Abdeckelement. Die Zerkleinerungseinheit, insbesondere die Messer der Zerkleinerungseinheit, können am flächigen Abdeckelement montiert sein. Insbesondere kann sich der Zuführbereich in Transportrichtung der Fördereinheit erstrecken.

Die Höhe des Zuführbereichs kann konstant sein oder abnehmen, insbesondere kontinuierlich abnehmen. Durch eine abnehmende Höhe kann das Pflanzenmaterial insbesondere zu den Messern hin gepresst werden. Dadurch kann der Schneidevorgang verbessert werden, da die zu schneidenden Pflanzenfasern dann nicht nach oben hin ausweichen können. Die Abnahme der Höhe des Zuführbereichs kann auch durch die Form der Messer, die am Abdeckelement montiert sind, bedingt sein. Dafür können die Messer vor der Schneidkante einen entsprechend gekrümmten Bereich umfassen. Beispielsweise kann der Zuführbereich eine maximale Höhe zwischen 5 cm und 30 cm, insbesondere zwischen 5 cm und 20 cm, insbesondere zwischen 5 cm und 15 cm, aufweisen. Diese maximale Höhe kann der Zuführbereich insbesondere an dessen Öffnung, auf die Förderrichtung der Fördereinheit bezogen, aufweisen.

Insbesondere kann die Höhe des Zuführbereichs in Transportrichtung der Fördereinheit abnehmen, insbesondere linear abnehmen, insbesondere um einen Betrag abnehmen, der den zurückgelegten Weg in Transportrichtung der Fördereinheit entspricht. Das Verhältnis zwischen der Länge des Zuführbereichs zur Höhe an dessen Öffnung kann zwischen 0,5 und 5, insbesondere zwischen 0,8 und 4, insbesondere zwischen 1 und 3, betragen. Dabei kann unter der Länge des Zuführbereichs insbesondere die Strecke zwischen der Öffnung und der Schneidkante der Messer verstanden werden.

Die Erfindung stellt außerdem eine Verwendung der oben beschriebenen Vorrichtung zum Zerkleinern von faserförmigen Pflanzenmaterial, insbesondere Heu, Stroh oder Silage, bereit.

Die Vorrichtung zum Zerkleinern von faserförmigen Pflanzenmaterial kann dabei eines oder mehrere der oben genannten Merkmale aufweisen.

Die Erfindung stellt ferner ein Verfahren zum Zerkleinern von faserförmigen Pflanzenmaterial, insbesondere Heu, Stroh oder Silage, mit einer oben beschriebenen Vorrichtung bereit. Dabei kann das Verfahren insbesondere die Schritte umfassen, dass das Pflanzenmaterial in eine Zuführung aufgenommen wird, dass Pflanzenfasern vom zugeführten Pflanzenmaterial losgelöst werden und zu einer Zerkleinerungseinheit befördert werden, und dass die Pflanzenfasern mithilfe der Zerkleinerungseinheit zerkleinert werden.

Die Vorrichtung zum Zerkleinern von faserförmigen Pflanzenmaterial kann dabei wiederum eines oder mehrere der oben genannten Merkmale aufweisen.

Weitere Merkmale und Vorteile der Erfindung werden nachfolgend anhand der beispielhaften Figuren beschrieben. Dabei zeigt:
- Fig. 1: eine beispielhafte Vorrichtung zum Zerkleinern von faserförmigen Pflanzenmaterial in schematischer Darstellung,
- Fig. 2: eine beispielhafte Zerkleinerungseinheit in schematischer Darstellung,
- Fig. 3: beispielhafte Mitnehmer in schematischer Darstellung,
- Fig. 4a: eine weitere beispielhafte Vorrichtung zum Zerkleinern von faserförmigen Pflanzenmaterial in schematischer Darstellung
- Fig. 4b: eine beispielhafte Fördereinheit mit konkaven und konvexen Lamellen in schematischer Darstellung,
- Fig. 5: eine weitere beispielhafte Vorrichtung zum Zerkleinern von faserförmigen Pflanzenmaterial in schematischer Darstellung, und
- Fig. 6: eine weitere beispielhafte Vorrichtung zum Zerkleinern von faserförmigen Pflanzenmaterial in schematischer Darstellung.

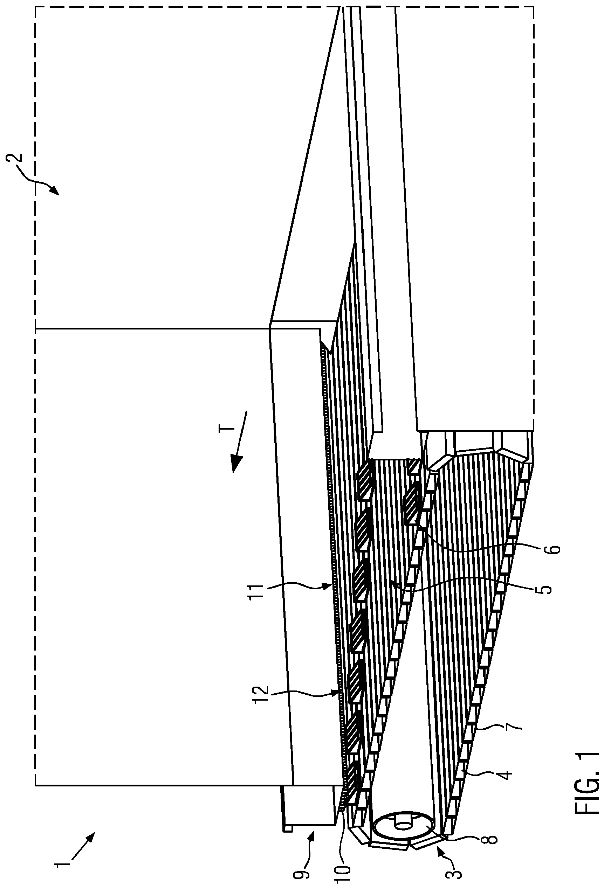

Figur 1 zeigt schematisch eine beispielhafte Vorrichtung 1 zum Zerkleinern von faserförmigen Pflanzenmaterial, wie Heu, Stroh oder Silage. Die Vorrichtung 1 umfasst eine Zuführung 2 zur Aufnahme des Pflanzenmaterials und eine Fördereinheit 3. In diesem Beispiel ist die Zuführung 2 oberhalb der Fördereinheit 3 angeordnet und nach oben hin geöffnet.

Dabei umfasst die Fördereinheit 3 eine Förderkette 4 mit einer geschlossenen Förderfläche 5 und zinkenförmige Mitnehmer 6. Die Mitnehmer 6 erstrecken sich von der Förderfläche 5 weg und sind in Blöcken diagonal zur Transportrichtung T der Förderkette 4 angeordnet. Die Transportrichtung T zeigt die im Betrieb übliche Förderrichtung des Pflanzenmaterials an. Die Förderkette 4 ist über einen nicht gezeigten Antrieb antreibbar. Beispielsweise kann die Förderkette 4 über ein Planetengetriebe oder Stirnradgetriebe mit einem Motor, insbesondere einem Elektromotor, angetrieben werden. Die Förderfläche 5 wird durch benachbarte Lamellen 7 gebildet. Die Lamellen 7 können sich über Umlenkrollen 8 bewegen, welche die Fördereinheit 3 versteifen.

Des Weiteren umfasst die Vorrichtung 1 eine Zerkleinerungseinheit 9, die voneinander beabstandete, stationäre Messer 10 umfasst. Die Messer 10 sind in regelmäßigen Abständen entlang der kompletten Breite der Fördereinheit 3 oberhalb der Förderfläche 5 angeordnet. Die geschärften Kanten der Messer 10, also deren Schneidkanten, sind gegen die Transportrichtung T angeordnet. Die Mitnehmer 6 sind durch die Messer 10 hindurch bewegbar.

Zudem umfasst die Zerkleinerungseinheit 9 einen Zuführbereich 11 für das Pflanzenmaterial. Dieser ist vor den Messern 10 angeordnet und erstreckt sich in Transportrichtung T. Die Mitnehmer 6 sind durch den Zuführbereich 11 hindurch bewegbar. Der Zuführbereich ist kanalförmig ausgebildet und nach oben hin durch ein flächiges Abdeckelement 12 begrenzt. Die Messer 10 sind am flächigen Abdeckelement 12 montiert.

Im Betrieb wird üblicherweise von der Zuführung 2 zugeführtes Pflanzenmaterial, von den Mitnehmern 6 losgelöst und zur Zerkleinerungseinheit 9 gefördert. Bei dem zu zerkleinernden Pflanzenmaterial kann es sich insbesondere um Heu, Stroh oder Silage handeln, beispielsweise in der Form von Ballen oder Blöcken. Anschließend bewegen sich die Mitnehmer 6 durch die Zerkleinerungseinheit 9, insbesondere durch die Messer 10, hindurch, wodurch das Pflanzenmaterial, insbesondere die losgelösten Pflanzenfasern, zerkleinert wird.

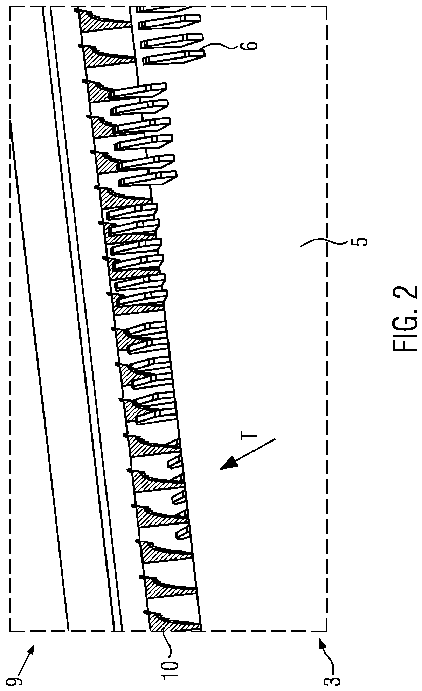

Figur 2 zeigt schematisch eine beispielhafte Zerkleinerungseinheit 9. Diese umfasst Messer 10, die quer zur Transportrichtung T einer Fördereinheit 3 angeordnet sind. Die Fördereinheit 3 ist in diesem Beispiel als Walze ausgebildet und umfasst eine geschlossene Förderfläche 5 und darauf angeordnete Mitnehmer 6. Die Mitnehmer 6 sind in mehreren Blöcken diagonal zur Transportrichtung T angeordnet und durch die Messer 10 hindurch bewegbar.

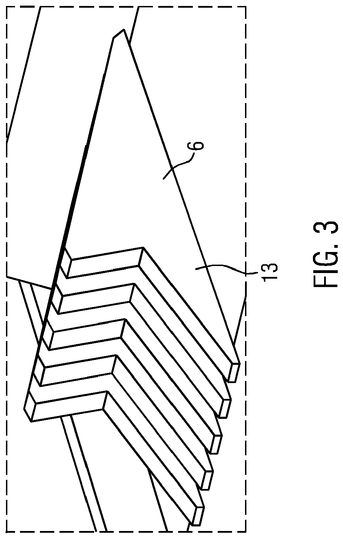

Figur 3 zeigt schematisch und beispielhaft einen Block von zinkenförmigen Mitnehmern 6. Diese sind in regelmäßigen Abständen zueinander angeordnet und derart geformt, dass Pflanzenfasern angehoben werden können. Eine Aufnahmespitze 13, die sich in Transportrichtung T erstreckt, kann sich unter die Pflanzenfasern bewegen und diese anheben.

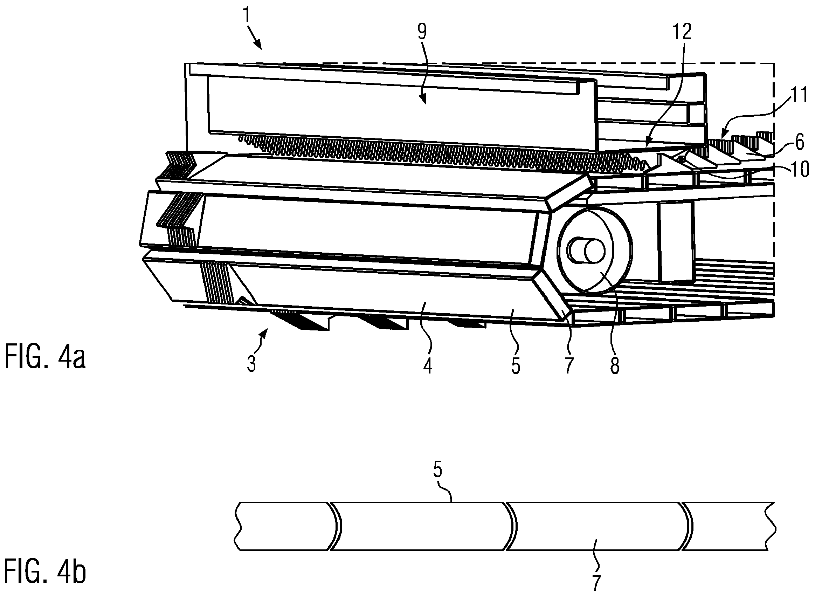

Figur 4a zeigt eine weitere beispielhafte Vorrichtung 1 zum Zerkleinern von faserförmigen Pflanzenmaterial. Die Vorrichtung 1 umfasst eine Fördereinheit 3, die eine Förderkette 4 mit einer geschlossenen Förderfläche 5 umfasst. Auf der Förderfläche 5 sind zinkenförmige Mitnehmer 6 angeordnet, die sich von der Förderfläche 5 weg erstrecken und in Blöcken diagonal zur Transportrichtung T angeordnet sind. Die Förderfläche 5 wird durch benachbarte Lamellen 7 gebildet. Diese können sich über Umlenkrollen 8 bewegen, welche die Fördereinheit 3 versteifen. Die Querschnittsfläche der Lamellen 7 parallel zur Transportrichtung T ist beispielsweise rechteckig geformt mit abgerundeten Ecken. Es wäre aber auch möglich, dass die Querschnittsfläche der Lamellen 7 parallel zur Transportrichtung T trapezförmig ausgebildet ist, mit nach oben angeordneter Basis.

Des Weiteren umfasst die Vorrichtung 1 eine Zerkleinerungseinheit 9, die voneinander beabstandete, stationäre Messer 10 umfasst. Die Messer 10 sind in regelmäßigen Abständen entlang der kompletten Breite der Fördereinheit 3 angeordnet. Die geschärften Kanten der Messer 10 sind gegen die Transportrichtung T angeordnet. Die Mitnehmer 6 sind durch die Messer 10 bewegbar.

Zudem umfasst die Zerkleinerungseinheit 9 einen Zuführbereich 11 für das Pflanzenmaterial. Dieser ist vor den Messern 10 angeordnet und erstreckt sich in Transportrichtung T. Die Mitnehmer 6 sind durch den Zuführbereich 11 hindurch bewegbar. Der Zuführbereich ist kanalförmig ausgebildet und nach oben hin durch ein flächiges Abdeckelement 12 begrenzt. Die Messer 10 sind am flächigen Abdeckelement 12 montiert. Die Abnahme der Höhe des Zuführbereichs 11 ist durch die Form der Messer 10 bedingt.

Figur 4b zeigt schematisch einen Querschnitt durch beispielhafte Lamellen 7 parallel zur Transportrichtung T. Von sich gegenüberliegenden Längsseiten von benachbarten Lamellen 7 ist jeweils eine konkav und eine konvex ausgebildet. Die Förderfläche 5 der Lamellen 7 ist geschlossen.

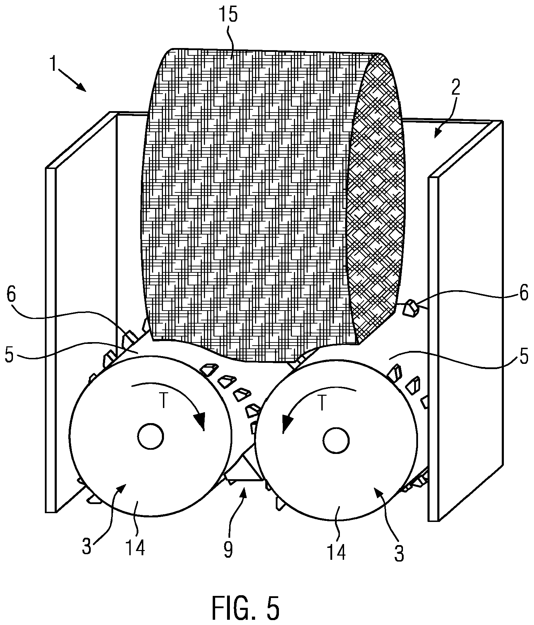

Figur 5 zeigt eine weitere beispielhafte Vorrichtung 1 zum Zerkleinern von faserförmigen Pflanzenmaterial. Die Vorrichtung 1 umfasst eine Zuführung 2 in Form eines oben offenen Behälters zur Aufnahme des Pflanzenmaterials, wie beispielsweise Ballen 15, und zwei Fördereinheiten 3. In diesem Beispiel ist die Zuführung 2 oberhalb der beiden Fördereinheiten 3 angeordnet und nach oben hin geöffnet.

Die Fördereinheiten 3 umfassen jeweils eine Walze 14 mit geschlossenen Förderflächen 5 und zinkenförmigen Mitnehmern 6. Die Transportrichtungen T zeigen den Drehsinn der jeweiligen Walze 14 an, wobei die beiden Walzen 14 gegenläufig zueinander antreibbar sind. Die Mitnehmer 6 erstrecken sich von der Förderfläche 5 weg und sind in Blöcken diagonal zur Transportrichtung T der Förderfläche angeordnet.

Des Weiteren umfasst die Vorrichtung 1 eine Zerkleinerungseinheit 9, die zwischen den beiden Walzen 14 angeordnet ist, und die voneinander beabstandete, stationäre Messer 10 (nicht eingezeichnet) umfasst. Die Mitnehmer 6 sind durch die Zerkleinerungseinheit 9 bewegbar. Die Messer 10 sind derart angeordnet, dass wenigstens ein Teil der Mitnehmer 6 der ersten Walze 14 durch die Messer 10 hindurch bewegbar ist und wenigstens ein Teil der Mitnehmer 6 der zweiten Walze 14 durch die Messer 10 hindurch bewegbar ist.

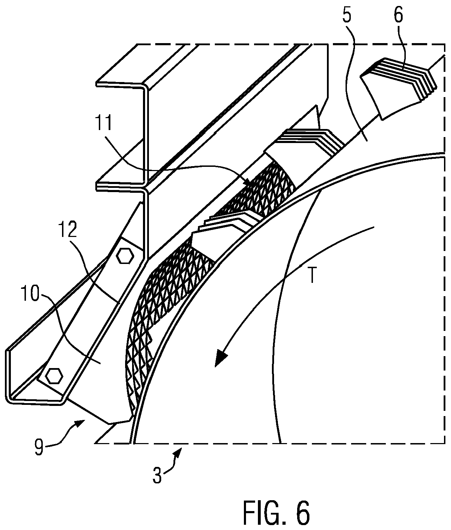

Figur 6 zeigt schematisch eine weitere beispielhafte Vorrichtung 1 in Detailansicht. Die Vorrichtung 1 umfasst eine Fördereinheit 3 und eine Zerkleinerungseinheit 9. Die Fördereinheit 3 umfasst zinkenförmige Mitnehmer 6, die sich von der geschlossenen Förderfläche 5 weg erstrecken.

Die Zerkleinerungseinheit 9 umfasst voneinander beabstandete, stationäre Messer 10, durch die Mitnehmern 6 hindurch bewegbar sind. Die Transportrichtung T zeigt die übliche Bewegungsrichtung der Mitnehmer 6 im Betrieb an. Die Messer 10 sind in regelmäßigen Abständen entlang der kompletten Breite der Fördereinheit 3 angeordnet. Die Schneidkanten der Messer 10 sind gegen die Transportrichtung T angeordnet und gezackt ausgebildet.

Des Weiteren umfasst die Zerkleinerungseinheit 9 einen Zuführbereich 11 für das Pflanzenmaterial. Dieser ist vor den Messern 10 angeordnet und erstreckt sich in Transportrichtung T. Die Mitnehmer 6 sind durch den Zuführbereich 11 hindurch bewegbar. Der Zuführbereich ist kanalförmig ausgebildet und nach oben hin durch ein flächiges Abdeckelement 12 begrenzt. Die Messer 10 sind am flächigen Abdeckelement 12 montiert. Die Abnahme der Höhe des Zuführbereichs 11 ist durch die gekrümmte Form der Messer 10 bedingt.

Es versteht sich, dass in den zuvor beschriebenen Ausführungsbeispielen genannte Merkmale nicht auf diese speziellen Kombinationen beschränkt und auch in beliebigen anderen Kombinationen möglich sind.

### Bezugszeichenliste

- 1: Vorrichtung
- 2: Zuführung
- 3: Fördereinheit
- 4: Förderkette
- 5: Förderfläche
- 6: Mitnehmer
- 7: Lamellen
- 8: Antriebsrolle oder Umlenkrolle
- 9: Zerkleinerungseinheit
- 10: Messer
- 11: Zuführbereich
- 12: Abdeckelement
- 13: Erstreckung in Transportrichtung T
- 14: Walze
- 15: Ballen
- T: Transportrichtung

## Patentansprüche

1. Vorrichtung (1) zum Zerkleinern von faserförmigen Pflanzenmaterial, insbesondere Heu, Stroh oder Silage, umfassend eine Zuführung (2) zur Aufnahme des Pflanzenmaterials, eine Fördereinheit (3) und eine Zerkleinerungseinheit (9), wobei die Fördereinheit (3) wenigstens einen zinkenförmigen Mitnehmer (6) zum Loslösen von Pflanzenfasern vom zugeführten Pflanzenmaterial und zum Fördern der Pflanzenfasern zur Zerkleinerungseinheit (9) umfasst, wobei die Zerkleinerungseinheit (9) wenigstens zwei voneinander beabstandete, stationäre Messer (10) umfasst, wobei die Fördereinheit (3) so ausgebildet ist, dass der wenigstens eine zinkenförmige Mitnehmer (6) durch die voneinander beabstandeten, stationären Messer (10) hindurch bewegbar ist.

2. Vorrichtung nach Anspruch 1, wobei die Fördereinheit eine Walze umfasst.

3. Vorrichtung nach Anspruch 1, wobei die Fördereinheit ein Förderband oder eine Förderkette umfasst, wobei die Fördereinheit insbesondere eine geschlossene Förderfläche umfasst.

4. Vorrichtung nach Anspruch 3, wobei die Fördereinheit eine Förderfläche umfasst, die durch in Förderrichtung benachbarte oder aneinandergrenzende Lamellen gebildet wird.

5. Vorrichtung nach Anspruch 4, wobei von sich gegenüberliegenden Längsseiten von benachbarten oder aneinandergrenzenden Lamellen jeweils eine konkav und eine konvex ausgebildet ist.

6. Vorrichtung nach wenigstens einem der vorangegangenen Ansprüche, wobei mehrere Mitnehmer entlang einer Linie quer zur Transportrichtung der Fördereinheit angeordnet sind.

7. Vorrichtung nach wenigstens einem der vorangegangenen Ansprüche, wobei mehrere Mitnehmer längs zur Transportrichtung der Fördereinheit verteilt angeordnet sind, insbesondere in Draufsicht auf die Förderfläche V-förmig, W-förmig oder diagonal angeordnet sind.

8. Vorrichtung nach wenigstens einem der vorangegangenen Ansprüche, wobei mehrere Mitnehmer jeweils in einem Block angeordnet sind, und wobei die Fördereinheit mehrere solcher Blöcke von Mitnehmern umfasst, insbesondere in Blöcken von wenigstens drei Mitnehmern, insbesondere von wenigstens sechs Mitnehmern, und wobei der Abstand benachbarter Mitnehmer innerhalb eines Blocks geringer ist als der Abstand benachbarter Blöcke zueinander.

9. Vorrichtung nach wenigstens einem der vorangegangenen Ansprüche, wobei die Vorrichtung zwei Fördereinheiten in Form von rotierenden Walzen umfasst, wobei die Zerkleinerungseinheit zwischen den zwei Walzen angeordnet ist oder die zwei Walzen zwischen zwei Zerkleinerungseinheiten angeordnet sind.

10. Vorrichtung nach wenigstens einem der vorangegangenen Ansprüche, wobei eine Vielzahl voneinander beabstandete, stationäre Messer vorgesehen sind, welche quer zur Transportrichtung der Fördereinheit angeordnet sind, insbesondere in regelmäßigen Abständen entlang der kompletten Breite der Fördereinheit.

11. Vorrichtung nach Anspruch 10, wobei die voneinander beabstandeten, stationären Messer entlang einer Linie quer zur Transportrichtung der Fördereinheit und/oder längs zur Transportrichtung der Fördereinheit verteilt angeordnet sind, insbesondere in Draufsicht V-förmig, W-förmig oder diagonal angeordnet.

12. Vorrichtung nach wenigstens einem der vorangegangenen Ansprüche, wobei die Zerkleinerungseinheit einen Zuführbereich für das Pflanzenmaterial zur Zerkleinerungseinheit umfasst, wobei der Zuführbereich vor den wenigstens zwei voneinander beabstandeten, stationären Messern angeordnet ist, und wobei der wenigstens eine zinkenförmige Mitnehmer durch den Zuführbereich hindurch bewegbar ist.

13. Vorrichtung nach Anspruch 12, wobei der Zuführbereich kanalförmig ausgebildet ist und nach oben hin begrenzt ist.

14. Vorrichtung nach wenigstens einem der vorangegangenen Ansprüche, wobei die Vorrichtung zum Zerkleinern von faserförmigen Pflanzenmaterial ein gezogener oder ein selbstfahrender Wagen, ein Zerkleinerungsroboter oder eine stationäre Anlage ist.

15. Verwendung einer Vorrichtung nach einem der Ansprüche 1 bis 14 zum Zerkleinern von faserförmigen Pflanzenmaterial, insbesondere Heu, Stroh oder Silage.

16. Verfahren zum Zerkleinern von faserförmigen Pflanzenmaterial, insbesondere Heu, Stroh oder Silage, mit einer Vorrichtung nach einem der Ansprüche 1 bis 14, das Verfahren umfassend die Schritte:
- Aufnahme des Pflanzenmaterials in eine Zuführung
- Loslösen von Pflanzenfasern vom zugeführten Pflanzenmaterial und Fördern der Pflanzenfasern zu einer Zerkleinerungseinheit
- Zerkleinern der Pflanzenfasern mithilfe der Zerkleinerungseinheit
